**Europäisches Patentamt**

**European Patent Office**

**Office européen des brevets**

(11) Veröffentlichungsnummer: **0 120 437**
**B1**

(12) **EUROPÄISCHE PATENTSCHRIFT**

(45) Veröffentlichungstag der Patentschrift:
24.09.86

(21) Anmeldenummer: **84103019.0**

(22) Anmeldetag: **19.03.84**

(51) Int. Cl.⁴: **H 02 G 15/013**

(54) Füllstücke aus plastischem Dichtungsmaterial für Kabelgarnituren.

(30) Priorität: **22.03.83 DE 3310377**

(43) Veröffentlichungstag der Anmeldung:
**03.10.84 Patentblatt 84/40**

(45) Bekanntmachung des Hinweises auf die Patenterteilung:
**24.09.86 Patentblatt 86/39**

(84) Benannte Vertragsstaaten:
**BE DE FR GB IT NL**

(56) Entgegenhaltungen:
EP-A-0 057 742
DE-A-3 127 567

(73) Patentinhaber: **Siemens Aktiengesellschaft Berlin und München, Wittelsbacherplatz 2, D-8000 München 2 (DE)**

(72) Erfinder: **Kunze, Dieter, Dipl.- Ing., Rosenstrasse 10, D-8027 Neuried (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Füllstück aus plastischem Dichtungsmaterial zum Abdichten der Zwickelräume zwischen den eingeführten Kabeln in den Kabeleinführungsbereichen von Kabelgarnituren aus schrumpfbarem Material.

Aus der DE-C 22 09 629 ist eine Anordnung zur gas- und feuchtigkeitsdichten Einführung elektrischer Kabel der oben beschriebenen Art bekannt. Diese Füllstücke werden zur Abdichtung des Einführungsraumes zwischen den Kabelmänteln und dem jeweiligen Muffenkörper verwendet, wobei diese meist in entpsrechenden Kammern des Muffenraumes eingesetzt werden. Diese Füllstücke sind meist als kreisförmige Scheiben aus plastischem Material hergestellt. Weiterhin ist ein Füllstück bekannt, welches auch in Kabelmuffen aus schrumpfbarem Material eingesetzt werden kann, wobei die benötigte Verdichtung lediglich durch die Schrumpkräfte der Kabelmuffe während des Schrumpfvorganges erreicht wird. Die Oberflächen der Aussparungen dieses Füllstückes sind mit einer Beschichtung aus Schmelzkleber versehen. Die Abdichtung in den inneren Bereichen dieser Füllstücke könnte unter Umständen nicht ausreichen, wenn die zum Aktivieren der Schmelzkleberschicht benötigte Wärme nicht bis zum Inneren der Füllstücke vordringen kann. Ein derartiges Füllstück kann aufgrund seiner Schmelzkleberbeschichtung nicht für jeden beliebigen Kabeldurchmesser verwendet werden.

So bestand für vorliegende Erfindung die Aufgabe, ein plastisches Füllstück zum Einsatz als druckfeste Abdichtungen in Schrumpfgarnituren zu schaffen, das in einem weiten Bereich unabhängig von den Durchmessern der zu montierenden Kabel eingesetzt werden kann. Diese Aufgabe wird durch die im kennzeichnenden Teil das Patentanspruches 1 angegebenen Maßnahmen gelöst.

Das Füllstück gemäß der Erfindung hat gegenüber dem Stand der Technik mehrere Vorteile, die unter anderem darin zu sehen sind, daß in großen Bereichen keine Auswahl bezüglich der Anpassung an verschiedene Kabeldurchmesser erfolgen muß und daß der Einsatz bei Kabelgarnituren aus schrumpfbarem Material ohne Hilfsmittel gewährleistet. Die Verdichtung des aus plastischsm Dichtungsmaterial bestehenden Füllstückes erfolgt durch die während des Schrumpfvorganges auftretenden Schrumpfkräfte. Ein weiterer Vorteil ergibt sich dadurch, daß die innen liegenden, an den Kabeln anliegenden Flächen des Füllstückes nicht mehr mit Schmelzkleber beschichtet werden müssen. Gerade in diesen Bereichen war die gesicherte Wärmezufuhr für das Aktivieren des dort befindlichen Schmelzklebers sehr kritisch, da die Wärmeleitung innerhalb der Dichtungsmasse nicht sicher kontrollierbar ist. Durch ungenügende Aktivierung des dort befindlichen Schmelzklebers in den Innenbereichen konnten Undichtigkeiten auftreten. Die Abdichtung in den äußeren Bereichen zwischen der Kabelgarnitur, der innen anliegenden Dichtungsmasse und dem Kabel ist jedoch sichergestellt, da die Wärmezufuhr während des Schrumpfvorganges für die Aktivierung des Schmelzklebers auf der Innenseite der Kabelgarnitur und auf der Außenseite des Füllstückes völlig ausreicht. Durch besondere Ausbildung des Füllstückes, zum Beispiel durch scharfkantige Ausbildung einer Umhüllung aus schrumpfbarem Material, welche das Füllstück aus plastischem Material umgibt, kann eine Anzeige für ausreichende Wärmezufuhr gewonnen werden. Die scharfkantige Ausbildung dieser Umhüllung zeichnet sich zunächst durch die erweichte Muffenwandung hindurch als kantige Kontur ab, die dann zurückgeht oder auch verschwindet, wenn die scharfkantige, im Inneren des Dichtungsbereiches befindliche Umhüllung ebenfalls weich geworden ist. Tritt dieser Zustand ein, so ist auch der innen liegende Bereich genügend erwärmt und aktiviert, so daß die Wärmezufuhr beendet werden kann. Weiterhin gewährt die in Längsrichtung an- und abschwellende Form des Füllstückes, daß es zu jeder Kabeldurchmesserkombination zwei Schnittebenen mit einer optimalen Umschließung des Füllstückes durch den Schrumpfgarniturenstutzen gibt, ohne daß die Höhe des Füllstückes durch Verpressung verkleinert werden müßte. Die Dimensionierung des Füllstückes erlaubt einen weiten Anwendungebereich bezüglich der Durchmesser der eingeführten Kabel; sie wird anhand von Figuren nachfolgend näher erläutert. Neben der Beschichtung der nach außen gerichteten Flächen des Füllstückes kann die Abdichtungssicherheit gegen Druckbelastung noch gesteigert werden, wenn auf den Außenflächen außerdem ein Band oder ein Ring aus zugfestem flexiblem Material angebracht wird. Besondere vorteilhaft ist, hierfür schrumpfbares Material zu verwenden, da beim Schrumpfen der Kabelgarnitur auch das Band oder der Ring zumindeet teilweise schrumpft und somit die plastische Dichtungsmasse des Füllstückes zusätzlich komprimiert und nach der Montage armiert.

Die Erfindung wird nun anhand von zehn Figuren nähererläutert.

Figur 1 verdeutlicht die Dimensionierung des Füllstückes bei Einführung von zwei Kabeln.

Figur 2 erläutert die Einführung von drei nebeneinander liegenden Kabeln, während die Figur 3 die Einführung von drei Kabeln mit zu einem T-förmigen Füllstück zusammengesetzten Füllstücken mit rechteckigem Querschnitt.

Figur 4 zeigt ein ovales Füllstück.

Figur 5 zeigt ein rautenförmiges Füllstück.

Figur 6 zeigt ein kreisförmiges Füllstück.

Figur 7 erläutert in einem Querschnitt die Anordnung einer äußeren Umhüllung aus einem Band oder Ring aus zugfestem Material mit Schmelzkleberbeschichtung.

Die Figuren 8 bis 10 zeigen eine weitere Ausführungsform eines Füllstückes in verschiedenen Ansichten.

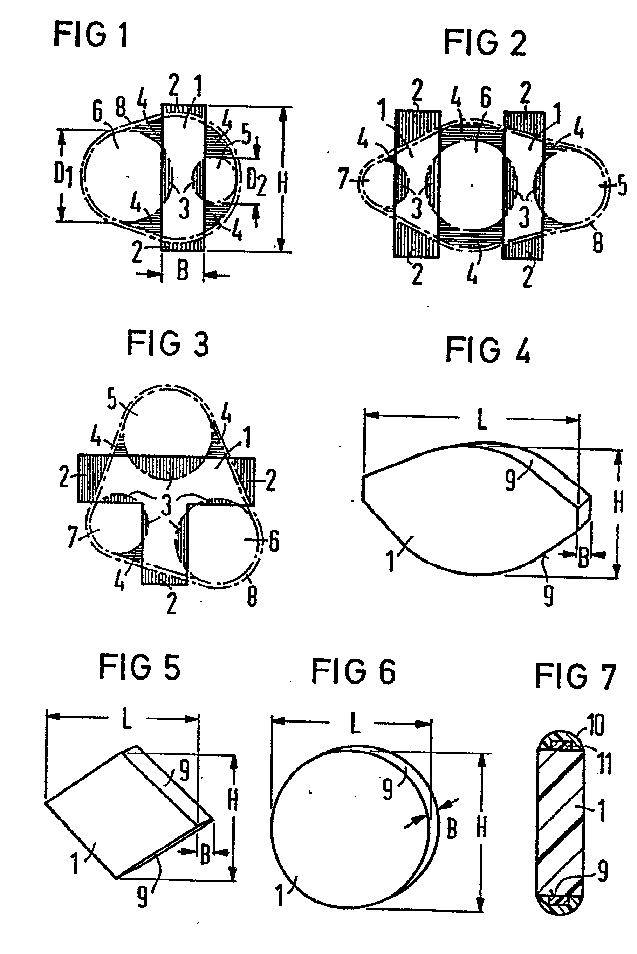

In Figur 1 wird das Prinzip einer Kabeleinführung in einer Kabelgarnitur aus schrumpfbarem Material unter Verwendung des erfindungsgemäßen Füllstückes 1 erläutert. Das Füllstück 1 besteht aus einem etwa rechteckförmigen Block aus plastischem Material, wobei es in Längsrichtung - hier nicht ersichtlich - an- bzw. abschwellend, das heißt, daß es in seiner Höhe H sich verändernd ausgebildet ist. Es geht aus der Figur 1 nun hervor, daß zum Beispiel zwei nebeneinanderliegende Kabel 5 und 6 mit unterschiedlichen Durchmessern beiderseite des Füllstückes 1 angeordnet sind und sich in die plastische Dichtungsmasse des Füllstückes 1 seitlich einpressen. Dabei wird die Dichtungsmasse von den Kabeln 5 und 6 in den Bereichen 3, die senkrecht schraffiert sind, in die waagrecht schraffierten Zwickelbereiche 4 zwischen den Kabeln 5 und 6 verdrängt. Weiterhin werden die überstehenden, ebenfalls senkrecht schraffierten Bereiche 2 des Füllstückes 1 während des Schrumpfvorganges durch die schrumpfende Kabelgarnitur 8 in die Zwickelbereiche 4 mit eingepreßt, so daß durch die Verdrängung der Dichtungsmasse gleichzeitig eine Verdichtung erfolgt, die zur Abdichtung des Kabeleinführungsbereiches führt. Die Dimensionierung eines solchen Füllstückes 1, das in weiten Bereichen verschiedenster Kabeldurchmesser eingesetzt werden kann, erfolgt etwa nach folgender Bestimmung:

$$D_2 \leqslant H < 4.D_1 \text{ und}$$
$$0,5. D_2 \leqslant B \leqslant D_1$$

Die Länge des Füllstückes ist etwa der Höhe H gleich, wobei H als maximale Höhe zu verstehen ist.

Das bedeutet: Die maximale Höhe H des Füllstückes 1 ist mindestens so groß zu wählen wie der Durchmesser $D_2$ des kleinsten eingeführten Kabels 5, sollte jedoch nicht größer sein als der vierfache Durchmesser $D_1$ des größten eingeführten Kabels 6. Die Breite B des Füllstückes 1 sollte größer sein als der halbe Durchmesser $D_2$ des kleinsten eingeführten Kabels 5, aber kleiner als der Durchmesser $D_1$ des größten eingeführten Kabels 6. Bei einer derartigen Dimensionierung ergeben sich optimale Dichtungsbedingungen in den Kabeleinführungsbereichen einer schrumpfbaren Kabelgarnitur 8. Die Formgebung des Füllstückes 1 in Längsrichtung wird im folgenden noch näher erläutert.

Die Figur 2 zeigt einen Kabeleinführungsbereich mit drei Kabeln 5, 6 und 7. Die Dimensionierung des jeweils zwischen den Kabeln erforderlichen Füllstückes 1 läßt sich - wie beschrieben - aus den Abmessungen der Kabel, zwischen denen es angeordnet ist, bestimmen. Auf diese Weise lassen sich beliebige Aneinanderreihungen von Kabeleinführungen herstellen. Nach dem Schrumpfvorgang ergeben sich wiederum die gleichen Verhältnisse wie anhand Fig. 1 beschrieben, die Bereiche 2 und 3 des Füllstückes 1-senkrechte Schraffur - sind in die Zwickelbereiche 4 - waagerechte Schraffur - verdrängt und dort infolge der Schrumpfung der Umhüllung 8 verdichtet.

Zwei der beschriebenen Füllstücke mit rechteckigem Querschnitt können bei 3 eingeführten Kabeln auch zu einem Füllstück mit T-förmigen Querschnitt zusammengesetzt werden, wie die in Fig. 3 angedeutet ist.

In den Figuren 4 bis 6 werden einige Beispiele für die Gestaltung der Füllstücke 1 in ihrer Längsausdehnung L gezeigt, wobei weitere Möglichkeiten dieser Art denkbar sind. Die eingeführten Kabel werden parallel zueinenderverlaufend angeordnet und in die längsseitigen Flächen eingedrückt. Die Füllstücke 1 sind in perspektivischer Darstellung mit den jeweiligen Angaben über die Höhe H und Breite B des Füllstückes 1 gezeigt. Die nach der Montage nach auswärts gerichteten Flächen 9 können mit einem Schmelzkleber beschichtet werden, so daß in diesen Bereichen besonders gute Haftung und Abdichtung zur Innenwandung der Kabelgarnitur gewährleistet ist. Das Füllstück 1 nach Figur 4 besitzt eine etwa ovale, nach Figur 5 eine rautenförmige und nach Figur 6 eine etwa kreisförmige Seitenausicht, das heißt, in Längsrichtung gesehen, nimmt die Höhe H des Füllstückes 1 zunächst zu und dann wieder ab. Diese Ausgestaltung gewährt, wie bereits erwähnt, mindestens in zwei Schnittebenen eine ausreichende Verpressung in den Zwickelbereichen zwischen den eingeführten Kabeln und der aufgeschrumpften Kabelgarnitur. In vorteilhafter Weise können in die seitlichen, in der Längsausdehnung verlaufenden Flächen in den Einlegebereichen der Kabel längsverlaufende Eindellungen eingebracht werden, wodurch die Einlage der Kabel erleichtert wird.

Alle gezeigten Füllstücken können zur Stützung der plastischen Dichtungsmasse auf dem äußeren Umfang mit einem Band oder einem Ring aus zugfestem Material versehen werden, wie es im Schnittbild der Figur 7 angedeutet ist. Die plastische Dichtungsmasse des Füllstückes 1 wird von einem Ring 11 aus zugfestem Material umgeben, der in diesem Fall noch zusätzlich mit Schmelzkleber 10 auf der Außenseite beschichtet ist. Dieser Ring 11 kann auch aus schrumpfbarem Material bestehen, so daß während des Schrumpfvorganges durch den schrumpfenden Ring 11 eine zusätzliche Komprimierung des Dichtungsmaterials erfolgt. Der Schmelzkleber 10 vermittelt dabei die Haftung und Abdichtung zur umgebenden Schrumpfgarnitur. Der Ring oder das Band ist zweckmäßigerweise in den Bereichen, in denen eine Berührung mit den Kabeln zustande kommen kann, bogenförmig ausgeschnitten.

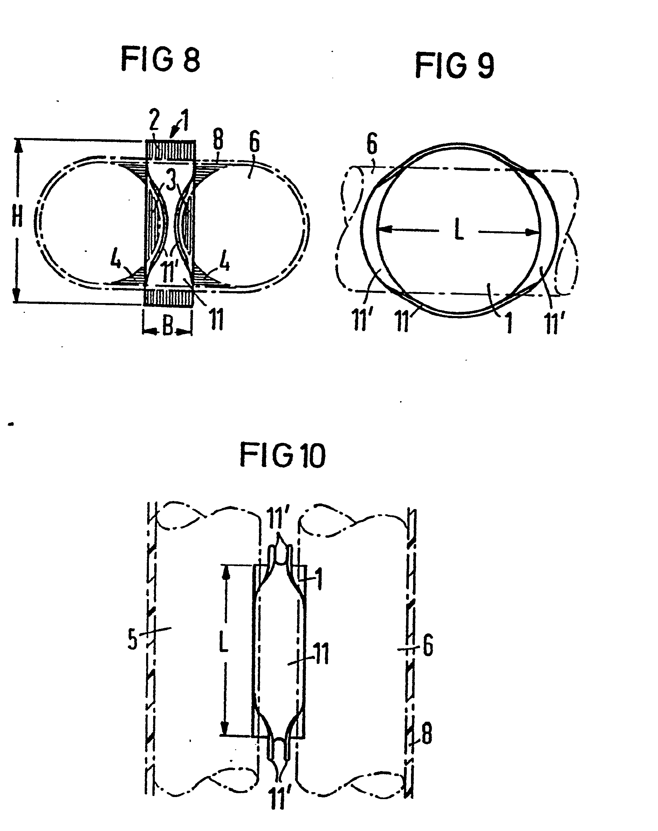

Die Figuren 8 bis 10 zeigen ein weiteres Füllstück 1, das von einem Ring 11 umgeben ist, der in den möglichen Berührungsbereichen mit den eingeführten Kabeln 5 und 6 als Fortsätze 11' nach auswärts gezogen ist und somit in diesen Bereichen dünner wird als im übrigen Längsbereich. Die Figur 8 zeigt in der Frontansicht zwei eingeführte Kabel 5 und 6, die in der plastischen Dichtungsmasse des dazwischen liegenden Füllstückes 1 eingepreßt sind. Das Dichtungsmaterial dieser Bereiche 3, sowie die Bereiche 2 ist durch die Schrumpfung der Kabelgarnitur 8 wiederum in den Zwickelbereichen 4 komprimiert. Das Füllstück 1 ist von einem Ring 11 umgeben, der im Bereich zwischen den beiden Kabeln 5 und 6 als Fortsätze 11' herausgezogen ist. In der Figur 9 ist die gleiche Anordnung in einer Längsansicht wiedergegeben, wobei übersichtlichkeitshalber das Kabel 5 nicht gezeichnet ist. Das Füllstück 1 hat hier ursprünglich eine kreisförmige Seitenansicht und in Längsrichtung 11 zwischen die Kabel 5 und 6 eingelegt ist. Das die Dichtungsmasse des Füllstückes 1 umgebende Band 11 zeigt wieder die ausgezogenen Fortsätze 11', die an beiden Enden des Dichtungsbereiches zu liegen kommen. In Figur 10 ist diese Kabeleinführung in einer Draufsicht dargestellt. Der Ring 11 ist am Anfang und am Ende des Dichtungsbereiches jeweils als Fortsatz 11' an seinen beiden Rändern zusammengezogen und bildet jeweils den nach außen gerichteten Fortsatz 11'. Nach der Schrumpfung sind die beiden Kabel 5 und 6, die hier in der Vormontage nur geringfügig in das Füllstück 1 eingedrückt sind, nahe aneinandergepreßt, wobei die plastische Dichtungsmasse entlang der Kabelberührungsfläche komprimiert ist.

Als vorteilhafte Ergänzung zur Ausbildung der Füllstücke 1 kann man zusätzlich nach außen gerichtete Ausprägungen an dem aus schrumpfbarem Material bestehenden Ring 11 anbringen, die dann als Indikatoren für ausreichende Wärmezufuhr dienen können. Diese Ausprägungen des Ringes 11 im Inneren der Kabelgarnitur werden während des Schrumpfvorganges durch die Wandung der Kabelgarnitur hindurch ebenfalls erwärmt und erweichen dann, wenn die Wärmezufuhr ausreichend ist. Sie verlieren dann durch die Komprimierung der Schrumpfgarnitur ihre scharfen Kanten und zeigen somit an, daß die Wärmezufuhr ausreichend ist. Nach dieser Indikation kann die Wärmezufuhr beendet werden. Auf diese Weise erhält man eine einfache Anzeige über die zur Aktivierung des Schmelzklebers benötigte Wärmezufuhr.

## Patentansprüche

1. Füllstücke aus plastischem Dichtumgsmaterial zum Abdichten der Zwickelräume zwischen den eingeführten Kabeln in den Kabeleinführungsbereichen von Kabelgarnituren aus schrumpfbarem Material, dadurch gekennzeichnet, daß das Füllstück (1) vor Schrumpfung der Kabelgarnitur senkrecht zur Kabeleinführungsrichtung einen nahezu rechteckigen Querschnitt aufweist, daß die Höhe (H) dieses Querschnittes mindestens so groß ist wie der Durchmesser ($D_2$) des dünnsten eingeführten Kabels (5), jedoch nicht größer als der vierfache Durchmesser ($D_1$) des dicksten Kabels (6) daß die Brüte (B) dieses Querschnittes größer als die Hälfte des Durchmessers ($D_2$) des dünnsten eingeführten Kabels (5) ist, jedoch kleiner als der Durchmesser ($D_1$) des dicksten eingeführten Kabels (6) und daß das Füllstück (1) in seiner in Kabeleinführungsrichtung verlaufenden Längsausdehnung (L) zunächst ansschwillt und dann wie der abschwillt, wobei sich die vorstehende Höhenangabe auf den größten Querschnitt des an - und wieder abschwelleden Füllstückes bezieht.

2. Füllstück nach Anspruch 1, dadurch gekennzeichnet, daß es in seiner quer zur Kabeleinführungsrichtung liegenden Seitenansicht eine langgestreckte, im wesentlichen ovale Form aufweist.

3. Füllstück nach Anspruch 1, dadurch gekennzeichnet, daß es in seiner quer zur Kabeleinführungsrichtung liegenden Seitenansicht die Form einer Raute anfweist.

4. Füllstück nach Anspruch 1, dadurch gekennzeichnet, daß es in seiner quer zur Kabeleinführungsrichtung liegenden Seitenansicht die Form eines Kreises anfweist.

5. Füllstück nach Anspruch 1, dadurch gekennzeichnet, daß es in seiner quer zur Kabeleinführungsrichtung liegenden Seitenansicht die Form eines Halbkreises aufweist.

6. Füllstück nach einem der vorhergehenden Ansprüche, dadurch gekennzeichnet, daß die seitlichen, die Kabel (5, 6) berührenden Flächen in Längsrichtung (L) eingedellt sind.

7. Füllstück nach einem der vorhergehenden Ansprüche, dadurch gekennzeichnet, daß es mit einem Schmelzkleber beschichtet ist.

8. Füllstück nach einem der Ansprüche 1 bis 6, dadurch gekennzeichnet, daß nur die von den eingeführten Kabeln (5, 6) nicht berührten Längsflächen mit Schmelzkleber beschichtet sind.

9. Füllstück nach einem der vorhergehenden Ansprüche, dadurch gekennzeichnet, daß die von den eingeführten Kabeln (5, 6) nicht berührt Längsflächen von einem zugfesten Band oder Ring (11) aus wärmefestem Material umgeben sind.

10. Füllstück nach Anspruch 9, dadurch gekennzeichnet, daß die von den eingeführten Kabeln (5, 6) nicht berührten Längsflächen von einem Band oder einem Ring (11) aus schrumpfbarem Material umgeben sind.

11. Füllstück nach Anspruch 9 oder 10, dadurch gekennzeichnet, daß das Band oder der Ring (11) auf der nach außen weisenden Seite mit Schmelzkleber (10) beschichtet ist.

12. Füllstück nach einem der Ansprüche 9 bis 11, dadurch gekennzeichnet, daß das Band bzw. der Ring (11), welcher das plastische Material des Füllstücks (1) in Kabeleinführungsrichtung umfaßt, in den zwischen den Kabeln (5, 6) liegenden Bereichen bogenförmig ausgespart ist.

13. Füllstück nach einem der Ansprüche 9 bis 11, dadurch gekennzeichnet, daß das Band bzw. der Ring (11), welcher das plastische Material des Füllstückes (1) in Kabeleinführungsrichtung umfaßt, in den zwischen den Kabel (5, 6) liegenden Bereichen bogenförmig zu Fortsätzen (11') mit geringerer Breite ausgezogen ist.

14. Füllstück nach einem der vorhergehenden Ansprüche, dadurch gekennzeichnet, daß an dem aus schrumpfbarem Material bestehenden Band bzw. Ring (11) nach außen weisende scharfkantige Ausprägungen ausgebildet sind.

## Claims

1. Filling pieces of plastic sealing material for sealing the interstices between the inserted cables in the cable insertion regions of cable fittings made of a shrinkable material, characterised in that, prior to the shrinkage of the cable fitting, the filling piece (1) has a substantially rectangular cross-section at right angles to the cable insertion direction; that the height (H) of the cross-section is at least as great as the diameter ($D_2$) of the thinnest inserted cable (5), but not greater than four times the diameter ($D_1$) of the thickest cable (6); that the width (B) of the cross-section is greater than half the diameter ($D_2$) of the thinnest inserted cable (5), but smaller than the diameter ($D_1$) of the thickest inserted cable (6); and that in its longitudinal extent (L) in the direction of cable insertion, the filling piece (1) first increases and then decreases, the height requirement previously referred to, relating to the largest cross-section of the increasing and decreasing filling piece.

2. A filling piece as claimed in Claim 1, characterised in that in side view transversely to the direction of the cable insertion, it has an elongate, essentially oval form.

3. A filling piece as claimed in Claim 1, characterised in that in side view transversely to the direction of cable insertion, it has the form of a rhombus.

4. A filling piece as claimed in Claim 1, characterised in that in side view transversely to the direction of cable insertion, it has the form of a circle.

5. A filling piece as claimed in Claim 1, characterised in that in side view transversely to the direction of the cable insertion, it has the form of a semi-circle.

6. A filling piece as claimed in one of the preceding Claims, characterised in that the side surfaces contacting the cables (5, 6) are indented in the longitudinal direction (L).

7. A filling piece as claimed in one of the preceding Claims, characterised in that it is coated with a fusion adhesive.

8. A filling piece as claimed in one of Claims 1 to 6, characterised in that only the longitudinal surfaces which are not contacted by the inserted cables (5, 6), are coated with fusion adhesive.

9. A filling piece as claimed in one of the preceding Claims, characterised in that the longitudinal surfaces which are not contacted by the inserted cables (5, 6), are surrounded by a pullproof strip or ring (11) made of a heat-resistant material.

10. A filling piece as claimed in Claim 9, characterised in that the longitudinal surfaces which are not contacted by the inserted cables (5, 6) are surrounded by a strip or a ring (11) made of a shrinkable material.

11. A filling piece as claimed in Claim 9 or Claim 10, characterised in that the strip or ring (11) is coated with a fusion adhesive (10) on the outwardly directed side.

12. A filling piece as claimed in one of Claims 8 to 11, characterised in that the strip or ring (11) which surrounds the plastic material of the filling piece (1) in the direction of cable insertion, is recessed in curved fashion in the regions lying between the cables (5, 6).

13. A filling piece as claimed in one of Claims 8 to 11, characterised in that the strip or ring (11) which surrounds the plastic material of the filling piece (1) in the direction of the cable insertion, is bent in curved fashion to form extensions (11') of small width in the regions between the cables (5, 6).

14. A filling piece as claimed in one of the preceding Claims, characterised in that outwardly-pointing sharp edges are formed on the strip or ring (11) made of shrinkable material.

## Revendications

1. Pièces de remplissage constituées en une matière plastique d'étanchéité pour réaliser la fermeture étanche des interstices présents entre les câbles insérés dans les zones d'insertion de garnitures de câbles constituées en un matériau pouvant se contracter, caractérisées par le fait que la pièce de remplissage (1) possède une section transversale approximativement rectangulaire perpendiculairement à la direction d'insertion du câble, avant la contraction de la garniture de câble, que la hauteur (H) de cette section transversale est au moins égale au diamètre $D_2$ du câble le plus mince (5) introduit, tout en n'étant pas supérieur eau quadruple du diamètre $D_1$ du câble le plus gros (6), que la largeur (B) de cette section transversale est supérieure à la moitié du diamètre ($D_2$) du câble le plus mince (5) introduit, tout en étant inférieure au diamètre ($D_1$) du câble le plus gros inséré (6) et que la longueur (L) de la pièce de remplissage (1) suivant la direction d'insertion des câbles augmente tout d'abord, puis diminue à nouveau, l'indication précédente de hauteur se rapportant à la section transversale maximale de la pièce de remplissage dont la longueur augmente et diminue à nouveau.

2. Pièce de remplissage suivant la revendication 1, caractérisée par le fait que lorsqu'on regarde sa vue en élévation latérale transversalement par rapport à la direction d'insertion du câble, elle possède une forme aliongée, sensiblement ovale.

3. Pièce de remplissage suivant la revendication 1, caractérisée par le fait que lorsqu'on regarde sa vue en élévation latérale transversalement par rapport à la direction d'insertion du câble, elle possède la forme d'un losange.

4. Pièce de remplissage suivant la revendication 1, caractérisée en ce que lorsqu'on regarde sa vue en élévation latérale transversalement par rapport à la direction d'insertion du câble, elle possède la forme d'un cercle.

5. Pièce de remplissage suivant la revendication 1, caractérisée par le fait que lorsqu'on regarde sa vue en élévation latérale transversalement par rapport à la direction d'insertion du câble, elle possède la forme d'un demi-cercle.

6. Pièce de remplissage suivant l'une des revendications précédentes, caractérisée par le fait que les surfaces latérales, qui contactent les câbles (5, 6), sont déformées suivant la direction longitudinale (L).

7. Pièce de remplissage suivant l'une des revendications précédentes, caractérisée par le fait qu'elle est recouvert par une colle fusible.

8. Pièce de remplissage suivant l'une des révendications 1 à 6, caractérisée par le fait que seules les surfaces longitudinales, qui ne sont pas contactées par les câbles (5, 6) insérés, sont recouvertes par une colle fusible.

9. Pièce de remplissage suivant l'une des revendications précédentes, caractérisée par le fait que les surfaces longitudinales, qui ne sont pas contactées par les câbles (5, 6) insérés, sont entourées par un collet ou une bague (11) résistant à la traction et constitué en un matériau résistant à la chaleur.

10. Pièce de remplissage suivant la revendication 9, caractérisée par le fait que les surfaces longitudinales, qui ne sont pas contactées par les câbles (5, 6) insérés, sont entourées par une bande ou par un anneau (11) constitué en un matériau pouvant se contracter.

11. Pièce de remplissage suivant la revendication 9 ou 10, caractéresée par le fait que la bande ou l'anneau (11) est recouvert par une colle fusible (10) sur sa face tournée vers l'extérieur.

12. Pièce de remplissage suivant l'une des revendications 9 à 11, caractérisée par le fait que la bande ou l'anneau (11), qui enveloppe la matière plastique de la pièce de remplissage (1) dans la direction d'insertion des câbles, est évidé en forme cercle dans les zones situées entre les câbles (5, 6).

13. Pièce de remplissage suivant l'une des revendications 9 à 11, caractérisée par le fait que la bande ou l'anneau (11), qui enveloppe la matière plastique de la pièce de remplissage (1) suivant la direction d'ensertion des câbles, est cintré en arc de cercle, dans les zones situées entre les câbles (5, 6), de manière à former des parties bombées (11') de faible largeur.

14. Pièce de remplissage suivant l'une des revendications précédentes, caractérisée par le fait que des moulures à arêtes vives sortant à l'extérieur sont ménagées sur la bande ou l'anneau constitué par un matériau pouvant se contacter.

# FIG 1

# FIG 2

# FIG 3

# FIG 4

# FIG 5

# FIG 6

# FIG 7

FIG 8

FIG 9

FIG 10